(19) Europäisches Patentamt
European Patent Office
Office européen des brevets

(11) EP 2 765 439 B1

(12) FASCICULE DE BREVET EUROPEEN

(45) Date de publication et mention de la délivrance du brevet:
16.11.2016 Bulletin 2016/46

(51) Int Cl.:
*G01S 7/40* (2006.01)     *G01S 13/75* (2006.01)
*G01S 13/91* (2006.01)

(21) Numéro de dépôt: 14153999.9

(22) Date de dépôt: 05.02.2014

(54) **Transpondeur pour radar doppler, et système de localisation de cibles utilisant un tel transpondeur**

Transponder für Doppler-Radar, und System zur Lokalisierung von Zielen, das einen solchen Transponder verwendet

Transponder for Doppler radar, and system for locating targets using such a transponder

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 08.02.2013 FR 1300275

(43) Date de publication de la demande:
13.08.2014 Bulletin 2014/33

(73) Titulaire: THALES
92400 Courbevoie (FR)

(72) Inventeurs:
• Garrec, Patrick
33700 Mérignac (FR)
• Cornic, Pascal
29820 Guilers (FR)
• Levaufre, Régis
22140 Cavan (FR)

(74) Mandataire: Lucas, Laurent Jacques et al
Marks & Clerk France
Conseils en Propriété Industrielle
Immeuble Visium
22, Avenue Aristide Briand
94117 Arcueil Cedex (FR)

(56) Documents cités:
EP-A1- 2 341 363     WO-A1-00/22454
FR-A- 1 563 015     US-A- 4 686 534

**Description**

La présente invention concerne un transpondeur pour radar Doppler. Elle concerne également un système de localisation de cibles utilisant un tel transpondeur.

L'invention s'applique notamment dans le domaine des radars, plus particulièrement pour les systèmes collaboratifs. Elle s'applique par exemple pour l'aide au décollage, à l'atterrissage et à l'appontage des drones, en particulier des drones à voilure tournante, ainsi que les hélicoptères pilotés. Plus généralement, elle s'applique à la détection de cibles fixes ou lentement mobiles.

L'aide à l'atterrissage d'aéronefs pilotés ou de drones se fait de manière connue à l'aide de balises transpondeur. Au moins une balise équipe l'aéronef, cette dernière réémettant les signaux reçus, les signaux reçus provenant de l'émission d'un système de radar au sol. Les échos retransmis par la balise permettent notamment au système radar de calculer la position de la balise et donc de l'aéronef.

Les balises utilisées sont des balises bistatique transpondeur usuellement réalisées avec une transposition de fréquence permettant de séparer la réception de l'émission. Les solutions actuelles présentent plusieurs inconvénients.

Elles nécessitent un système électronique complexe et coûteux à bord des cibles, en particulier à bord des aéronefs. Un tel système à un poids important, consomme beaucoup d'énergie et présente une fiabilité relativement faible. De plus, la bande de fréquence occupée est large alors que les fréquences sont de plus en plus difficiles à allouer. Les problèmes de filtrage en cas d'utilisation de ce type de solution large bande ne sont pas simple à résoudre lorsque l'on souhaite faire de l'agilité de fréquence. Par ailleurs, cette solution est sensible aux vibrations car le quartz utilisé pour générer précisément la fréquence de transposition mélangée avec la fréquence reçu est dans la chaîne critique de la fréquence réémise par la balise.

Les systèmes d'aide à l'atterrissage, incorporant les balises équipant les aéronefs doivent être précis et fiables, notamment lorsque l'atterrissage est difficile et nécessite une grande précision, par exemple en cas d'appontage. On peut considérer à titre d'exemple l'appontage d'un hélicoptère, avec ou sans pilote. L'aide à l'appontage s'effectue donc à l'aide de balises transpondeur équipant les hélicoptères. En phase finale d'appontage, l'hélicoptère se déplace sensiblement à la même vitesse que le navire sur lequel il doit se poser. Sa vitesse est donc quasi nulle par rapport à ce navire et donc par rapport au système de radar placé sur ce navire. Par ailleurs, il est difficile de s'appuyer sur la vitesse des pales, en effet la vitesse des pales est inappropriée pour des mesures précises et apporte du bruit dans les mesures.. En particulier, en ce qui concerne la mesure des flashs de pales, l'écart angulaire lié aux effets de brillance, « glint », est trop important en regard des précisions de localisation demandées.

Pour ce système radar d'aide à l'atterrissage, la vitesse de la cible, la balise transpondeur, est nulle. La situation est donc celle de la détection d'une cible fixe. L'écho produit par la balise peut alors être difficile à intercepter car noyée dans le bruit ambiant. L'augmentation des performances de détection nécessite alors de complexifier les systèmes actuels tels que par exemple le système décrit précédemment.

Un document US 4 686 534 A décrit un système de type transpondeur susceptible d'équiper une cible coopérative face à un radar Doppler.

Un but de l'invention est notamment de pallier les inconvénients précités, et de permettre notamment la réalisation de systèmes coopératifs capables de détecter des cibles fixes ou faiblement mobiles simplement et à moindre coût. A cet effet, l'invention a pour objet un transpondeur apte à équiper une cible coopérative face à un radar Doppler, comportant au moins une antenne de réception apte à recevoir un signal émis par ledit radar et une antenne d'émission adaptée à réémettre un signal, le signal reçu par ladite antenne de réception étant modulé en amplitude avant d'être réémis par ladite antenne d'émission pour produire une variation de la surface équivalente radar de ladite cible, ladite variation provoquant un décalage de fréquence entre le signal émis et le signal reçu par ledit radar assimilable à un écho Doppler.

Un amplificateur est connecté entre l'antenne de réception et l'antenne d'émission, la modulation d'amplitude est réalisée par la modulation du gain de l'amplificateur. La puissance émise dépend du gain de l'amplificateur, la puissance du signal émis est asservie sur la puissance du signal reçu, de sorte que plus la cible est proche du radar moins elle émet pour éviter de placer le radar en saturation.

La modulation du gain est par exemple obtenue par la modulation de la tension d'alimentation de l'amplificateur, ladite tension étant produite par un générateur de tension. La loi de modulation est par exemple périodique. Avantageusement, la loi de modulation peut être parmi les suivantes : rectangulaire, triangulaire, sinusoïdale, gaussienne, de Hann, de Hamming et de Blackman-Harris.

Avantageusement, la loi de modulation du signal reçu est par exemple propre audit transpondeur, ce dernier pouvant être identifié par ladite loi de modulation.

L'antenne de réception est par exemple apte à recevoir un signal selon une polarisation et l'antenne d'émission à réémettre un signal selon une autre polarisation.

L'invention a également pour objet un système de localisation d'une cible, ledit système comportant au moins un transpondeur tel que décrit précédemment, ledit transpondeur équipant ladite cible, et au moins un radar Doppler positionné au sol, ledit radar détectant l'écho Doppler produit par la modulation d'amplitude du signal reçu par le transpondeur.

Ladite cible est par exemple un aéronef, le système étant apte à guider l'aéronef en phase d'atterrissage ou d'appontage.

D'autres caractéristiques et avantages de l'invention apparaîtront à l'aide de la description qui suit faite en regard de dessins annexés qui représentent :

- la figure 1, un exemple de réalisation d'un transpondeur selon l'art antérieur ;
- la figure 2, un exemple de réalisation d'un transpondeur selon l'invention ;
- la figure 3, un exemple de loi de modulation des signaux reçus par un transpondeur selon l'invention.

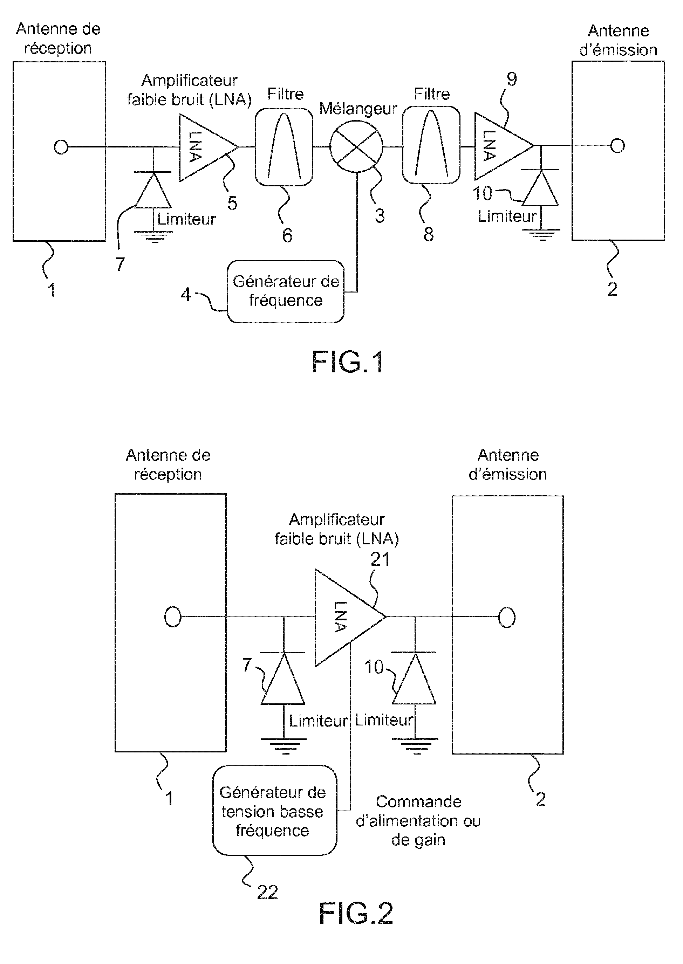

La figure 1 illustre un exemple de réalisation d'un transpondeur selon l'art antérieur, un tel transpondeur équipant un aéronef pour une aide à l'atterrissage par exemple. Le transpondeur, bistatique, comporte une antenne de réception 1 apte à capter les signaux émis par un système radar au sol. Il comporte également une antenne d'émission 2 apte à réémettre les signaux reçus via l'antenne de réception. Entre ces deux antennes 1, 2, les signaux reçus sont transposés en fréquence au moyen d'un mélangeur 3. Ce dernier comporte en entrées le signal reçu et un signal issus d'un générateur de fréquence 4. Entre l'antenne de réception 1 et le mélangeur 3, le signal reçu est amplifié puis filtré. L'amplification est effectuée au moyen d'un premier amplificateur faible bruit 5 dont la sortie est reliée à l'entrée d'un deuxième filtre 6, la sortie de ce dernier étant reliée à l'entrée du mélangeur. Un limiteur 7 est par exemple situé en sortie de l'antenne de réception 1, avant l'amplificateur 5. Le mélangeur est suivi d'un deuxième filtre 8. La sortie de ce deuxième filtre est reliée à l'entrée d'un deuxième amplificateur faible bruit 9 dont la sortie est reliée à l'antenne d'émission 10. Un limiteur 10 est par exemple connecté en sortie du deuxième amplificateur 9.

La figure 2 illustre un exemple de réalisation d'un transpondeur selon l'invention. Le transpondeur comporte au moins une antenne de réception 1, une antenne d'émission 2 et un amplificateur 21 dont le gain est commandable. Le gain de l'amplificateur 21 est par exemple commandé par un générateur de tension 22. A cet effet, la sortie de ce générateur de tension est par exemple reliée à l'entrée d'alimentation de l'amplificateur. Ce générateur 22 est apte à générer des variations de tension, ces variations pouvant prendre diverses formes périodiques comme cela sera décrit par la suite, dans une gamme de fréquence basse par exemple. L'amplificateur 21 est de préférence un amplificateur faible bruit.

Des dispositifs de protection, tels que des limiteurs 7, 10, sont par exemple placés en entrée et en sortie de l'amplificateur. Les variations de tensions ainsi produites créent une modulation du gain de l'amplificateur 21 et donc une modulation d'amplitude du signal amplifié. Un transpondeur selon l'invention effectue donc la réception d'une onde et sa réémission avec l'ajout d'une modulation d'amplitude. Ce signal ainsi modulé est ainsi considéré comme mobile au regard d'un radar Doppler et décalé en fréquence dans le banc du filtre du radar en fonction de la fréquence de modulation d'amplitude. Cela s'explique par la variation de la surface équivalente radar (SER) liée à la modulation. Le radar Doppler considère donc le signal reçu comme porteur d'une fausse vitesse Doppler à laquelle s'ajoute la vraie vitesse Doppler de la cible en mouvement. Si la cible est immobile, cette vraie vitesse est nulle. Ainsi, la solution apportée par l'invention est basée sur l'ajout d'un effet Doppler artificiel pour rendre visible une cible fixe, ou à vitesse réduite, par un radar Doppler. Cet ajout est généré de façon simple et économique.

Ainsi selon l'invention, dans un système de localisation d'aéronefs, notamment pour l'aide à l'atterrissage et à l'appontage, on équipe une cible coopérative, un aéronef, face à un radar Doppler par une balise transpondeur telle qu'illustrée par la figure 2, ajoutant un effet Doppler à l'écho et permettant une détection et un pistage même quand la cible est immobile. Ce transpondeur comporte un jeu de deux antennes, une en réception 1 et l'autre en émission 2, reliée par un amplificateur faible bruit modulé en amplitude permettant artificiellement de moduler l'onde radar reçue et d'ajouter un effet Doppler lié à cette modulation, celle-ci provoquant une variation de la surface équivalent radar de la cible.

Ce décalage fréquentiel, Doppler ajouté, permet notamment de s'éloigner fréquentiellement des zones de clutter et d'améliorer ainsi la détection des cibles équipées d'un transpondeur selon l'invention. Si la cible comporte une vitesse propre, cible mobile, le Doppler de celle-ci s'ajoute au décalage ainsi produit.

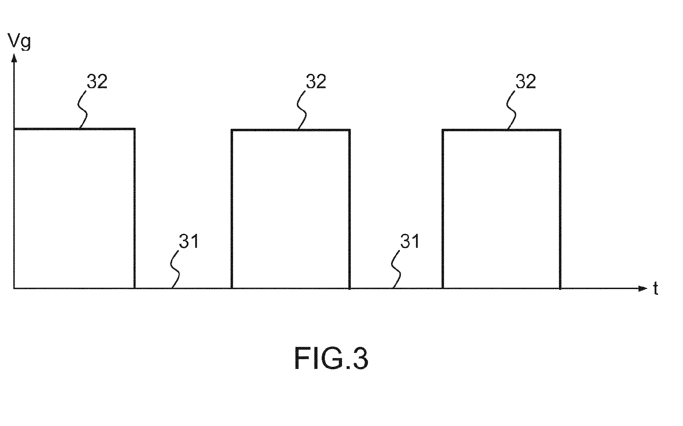

La modulation peut être en tout ou rien. Dans cette modulation, l'amplificateur est successivement alimenté en tension et non alimenté. La figure 3 illustre cette loi de modulation. La tension Vg délivrée par le générateur de tension 22 a une forme rectangulaire, de type « porte », n'ayant que deux valeurs 31, 32, la valeur basse 31 pouvant être nulle. La fréquence de modulation peut-être de l'ordre de 800 Hz à 1000 Hz. La modulation d'amplitude produite par l'amplificateur sur l'onde reçu suit la modulation de tension. Le choix de la fréquence de modulation dépend en partie de la fréquence de répétition du signal radar (prf). On choisit par exemple un pourcentage de la prf de façon à former un décalage entre les deux fréquences.

Avec une modulation d'amplitude telle qu'illustrée par la figure 3, on obtient au niveau du traitement radar un produit de convolution du signal avec une fonction « porte » dont le résultat est un signal en sin(x)/x, encore appelé sinus cardinal, soit un peigne de raies qui se replie dans le spectre de fréquence. Cette découpe du signal par la fonction « porte » peut générer des lobes secondaires relativement importants.

En pondérant le signal de modulation par une fenêtre adaptée, on peut diminuer les effets de cette découpe, en particulier diminuer les lobes secondaires. On peut ainsi pondérer le signal de modulation par une fenêtre triangulaire, sinusoïdale, gaussienne, de Hann, de Hamming, ou encore de Blackman-harris. La transformée de Fourier du signal analysé est convoluée avec la transformée de la fenêtre. Les amplitudes des lobes secondaires de la transformation sont abaissées. Le tableau ci-dessous indique les principales caractéristiques de certaines fenêtres d'analyse courantes telles qu'énoncées dans la littérature, pouvant être utilisées comme loi de modulation :

| Fenêtre | Lobe 2aire (dB) | Pente (dB/oct) | Bande passante (bins) | Perte au pire des cas (dB) |
|---|---|---|---|---|
| Rectangulaire | -13 | -6 | 1.21 | 3.92 |
| Triangulaire | -27 | -12 | 1.78 | 3.07 |
| Hann | -32 | -18 | 2.00 | 3.18 |
| Hamming | -43 | -6 | 1.81 | 3.10 |
| Blackman-Harris | -67 | -6 | 1.81 | 3.45 |

D'autres exemples sont disponibles dans l'ouvrage de M. Kunt « Traitement numérique des signaux » aux éditions Dunod.

Le tableau ci-dessus montre la fenêtre de type rectangulaire est la moins performante, le niveau d'atténuation des lobes secondaires n'étant que de - 13 dB. Les fenêtres les plus performantes en termes d'atténuation des lobes secondaires sont de la moins performante à la plus performante, la fenêtre triangulaire, la fenêtre de Hann, la fenêtre de Hamming et la fenêtre de Blackman-Harris, les lobes secondaires provoqués par cette dernière ayant un niveau d'atténuation de -67 dB.

Une modulation simple à effectuer est une modulation en sinus qui supprime la porteuse. Il peut cependant y avoir le risque que la porteuse soit en opposition de phase avec l'écho de peau ou bien que le module varie fortement d'une impulsion à l'autre.

On peut utiliser une modulation pseudo-aléatoire, ce qui permet d'étendre le domaine de vitesse mesurable par le banc de filtres en levant les indéterminations liées aux repliements.

Avantageusement, le fait que le signal reçu par le transpondeur soit amplifié permet de traiter des distances de cibles supérieures, la fonction s'apparentant dans ce cas à une fonction de communication ajoutée à une fonction radar.

Pour effectuer une mesure de la vitesse Doppler fonctionnant par rampes de fréquences, il faut et il suffit de sélectionner la case distance dans laquelle il y a des raies Doppler. Par intégration temporelle, on peut déterminer la vitesse du mobile avant d'initialiser le filtre Doppler. Une fois l'ordre de grandeur de la vitesse connu, il est possible de sélectionner avec plus de certitude les raies Doppler intéressantes dans la case distance concernée. Par principe, on trouve deux raies symétriques par rapport à la fréquence de modulation de l'alimentation de l'amplificateur 21 du transpondeur. En faisant la demi-somme de ces deux raies on retrouve la fréquence de modulation et en faisant la demi-différence on retrouve la vitesse Doppler propre à la cible. La mesure de la vitesse Doppler réelle est possible et facile en supprimant la porteuse, la vitesse Doppler étant égale à :

$$1/2 \ ((V_{porteuse} + V_{Doppler}) - (V_{Porteuse} - V_{Doppler})) \qquad\qquad (1)$$

$V_{porteuse}$ étant la vitesse de la porteuse et $V_{Doppler}$ étant la vitesse Doppler.

La vraie vitesse Doppler est toujours mesurable, elle est seulement décalée par rapport à la fréquence centrale de l'écart de fréquence généré par la modulation d'amplitude dans le transpondeur.

Un avantage de cette solution est, outre sa simplicité de réalisation, de permettre un décalage de la fréquence à mesurer au milieu du spectre Doppler et donc d'améliorer le rapport cible sur clutter de sol, le clutter de sol étant dans les fréquences basses. Ceci permet de visualiser même une cible immobile, de vitesse nulle et de Doppler nul, avec un radar Doppler qui naturellement élimine les cibles fixes. Avantageusement, dans un cas d'application d'aide à l'appontage d'un hélicoptère, l'invention permet d'éliminer le clutter des pales, mues par le rotor principal ou secondaire. Pour les systèmes de réception homodynes, la stabilité des oscillateurs a souvent tendance à rendre les filtres proches de la raies zéro inexploitables car la stabilité n'est pas suffisante pour extraire les cibles lentes du fouillis de sol, du clutter notamment. On s'affranchit de ces contraintes sur des cibles équipées d'un transpondeur selon l'invention.

Avantageusement, il est possible de distinguer deux cibles, ou plus, en attribuant une modulation d'amplitude donnée à chaque cible. Cette modulation d'amplitude, est commandée par le générateur de tension 22 de chaque transpondeur propre à chaque cible, à chaque aéronef par exemple.

Il est aussi possible d'élargir le domaine de fréquences Doppler exploitable par changement dynamique de la fréquence de modulation.

L'invention permet également une réponse sélective de la balise transpondeur à une forme d'onde particulière, par ajout d'un système de reconnaissance de forme. Par exemple le transpondeur peut répondre à une interrogation faite avec des rampes et non des impulsions.

L'invention permet également une réception dans une polarisation et une émission dans l'autre polarisation, croisée ou circulaire. A cet effet, l'antenne de réception 1 capte les signaux selon une polarisation et l'antenne d'émission 2 réémet les signaux selon une autre polarisation.

Dans le cas d'une application à un hélicoptère par exemple, la modulation de polarisation peut s'effectuer par rotation de l'antenne, dans le cas d'une retransmission sur l'hélice.

On peut effectuer un blocage de l'émission par demi-périodes pour être en permanence dans la raie centrale de Wobbulation de la fréquence de découpe pour augmenter le domaine vitesse, domaine Doppler.

L'invention apporte encore de nombreux avantages. Le bilan radar, représentatif de l'énergie reçue, décroit selon une loi en $1/R^2$ au lieu de $1/R^4$, R étant la distance de la cible au radar.

L'invention est simple à mettre en oeuvre. Elle apporte une meilleure précision par absence de mélangeur de fréquence ou de temps de retard, les autres solutions étant basées sur des retards ou des transpositions engendrant du retard. Elle ne nécessite pas de recherche de la fréquence de la balise qui par construction est comprise dans la bande de réception du radar.

Elle permet la détection de vitesses Doppler très faibles de cibles noyées dans le fouillis par rapport à ce que l'on aurait détecté en radar, par transposition du signal en dehors de la zone de clutter.

Elle permet une insensibilisation aux fluctuations thermiques de la porteuse, l'écart entre les vitesses repliées étant égal au double de la vitesse Doppler. Les puissances nécessaires pour les mesures sont faibles.

La puissance d'émission peut être réglée par la tension alimentant l'amplificateur 21, générée par le générateur de tension 22. Un asservissement de la puissance émise peut être effectué en fonction de la puissance d'entrée. De ce fait, plus la cible est proche du radar, moins elle émet pour éviter de placer le radar en saturation. La puissance du signal émis est asservie sur la puissance du signal reçu par asservissement du gain de l'amplificateur sur la puissance du signal reçu. La puissance du signal reçu peut être mesurée avec des moyens connus.

Dans une configuration en émission CW (onde continue) par le radar, il y a une ambiguïté sur la distance mais une mesure de vitesse très précise.

Un transpondeur selon l'invention peut avantageusement être utilisé dans un système de localisation d'un aéronef. Un tel système comporte au moins un radar Doppler. Ce dernier positionné au sol exploite l'écho Doppler artificiel produit par la modulation de l'amplitude du signal reçu par le transpondeur, celui-ci équipant l'aéronef. Les mesures de distance et de vitesse du transpondeur, donc de l'aéronef, effectuées par le radar sont envoyées à des moyens de traitement qui délivrent des instructions de pilotage fonction de ces mesures. Ces instructions peuvent être envoyées par transmission hertzienne à des pilotes, au moyen d'interfaces adaptées, ou à des organes de pilotage automatique dans le cas de systèmes auto pilotés, des drones ou robot par exemple.

Avantageusement, le radar Doppler peut mesurer des distances sur des cibles fixes, typiquement sur des aéronefs équipé du transpondeur, ces aéronefs évoluant à la même vitesse que le radar. C'est le cas par exemple pour l'aide à l'appontage d'un hélicoptère.

Inversement la balise peut être disposée au sol et le radar sur l'aéronef. Les mesures de vitesse et position de l'aéronef sont alors directement disponibles dans l'aéronef sans nécessiter de transmission hertzienne.

Un autre domaine d'application est possible en équipant des véhicules coopératifs au sol de balise afin de suivre ces véhicules y compris à l'arrêt par un aéronef équipé d'un radar doppler. Cela peut s'appliquer par exemple à des avions au sol en "taxiing", à des robots au sol ou à des appontages ou accostages de navire au quai ou en mer...

## Revendications

**1.** Transpondeur apte à équiper une cible coopérative face à un radar Doppler, comportant au moins une antenne de réception (1) apte à recevoir un signal émis par ledit radar et une antenne d'émission (2) adaptée à réémettre un signal, le signal reçu par ladite antenne de réception (1) étant modulé en amplitude avant d'être réémis par ladite antenne d'émission pour produire une variation de la surface équivalente radar de ladite cible, ladite variation provoquant un décalage de fréquence entre le signal émis et le signal reçu par ledit radar assimilable à un écho Doppler, un amplificateur (21) étant connecté entre l'antenne de réception (1) et l'antenne d'émission (2), la modulation d'amplitude étant réalisée par la modulation du gain de l'amplificateur (21), **caractérisé en ce que** la puissance émise dépend du gain de l'amplificateur (21), la puissance du signal émis est asservie sur la puissance du signal reçu par asservissement du gain de l'amplificateur sur la puissance du signal reçu, de sorte que plus la cible est proche du radar moins elle émet pour éviter de placer le radar en saturation.

2. Transpondeur selon la revendication 1, **caractérisé en ce que** la modulation du gain est obtenue par la modulation de la tension d'alimentation de l'amplificateur, ladite tension étant produite par un générateur de tension (22).

3. Transpondeur selon l'une quelconque des revendications précédentes, **caractérisé en ce que** l'amplificateur (21) est un amplificateur faible bruit.

4. Transpondeur selon l'une quelconque des revendications précédentes, **caractérisé en ce que** la loi de modulation est périodique.

5. Transpondeur selon l'une quelconque des revendications précédentes, **caractérisé en ce que** la loi de modulation est parmi les suivantes : rectangulaire, triangulaire, sinusoïdale, gaussienne, de Hann, de Hamming et de Blackman-Harris.

6. Transpondeur selon l'une quelconque des revendications précédentes, **caractérisé en ce que** la loi de modulation du signal reçu est propre audit transpondeur, ce dernier pouvant être identifié par ladite loi de modulation.

7. Transpondeur selon l'une quelconque des revendications précédentes, **caractérisé en ce que** l'antenne de réception (1) est apte à recevoir un signal selon une polarisation et l'antenne d'émission (2) est apte à réémettre un signal selon une autre polarisation.

8. Système de localisation d'une cible, **caractérisé en ce qu'**il comporte au moins un transpondeur selon l'une quelconque des revendications précédentes, ledit transpondeur équipant ladite cible, et au moins un radar Doppler positionné au sol, ledit radar détectant l'écho Doppler produit par la modulation d'amplitude du signal reçu par le transpondeur.

9. Système selon la revendication 8, **caractérisé en ce que** ladite cible est un aéronef.

10. Système selon la revendication 9, **caractérisé en ce qu'**il est apte à guider l'aéronef en phase d'atterrissage ou d'appontage.

**Patentansprüche**

1. Transponder, der auf einem kooperativen Ziel einem Doppler-Radar zugewandt installiert werden kann, umfassend wenigstens eine Empfangsantenne (1), die ein von dem Radar gesendetes Signal empfangen kann, und eine Sendeantenne (2) zum Neusenden eines Signals, wobei das von der Empfangsantenne (1) empfangene Signal vor dem Neusenden durch die Sendeantenne amplitudenmoduliert wurde, um eine Variation des Radarquerschnitts des Ziels zu erzeugen, wobei die Variation eine Frequenzverschiebung zwischen dem gesendeten Signal und dem empfangenen Signal durch das Radar bewirkt, assimilierbar an ein Doppler-Echo, wobei ein Verstärker (21) zwischen der Empfangsantenne (1) und der Sendeantenne (2) geschaltet ist, wobei die Amplitudenmodulation durch Modulieren der Verstärkung des Verstärkers (21) durchgeführt wird, **dadurch gekennzeichnet, dass** die gesendete Leistung von der Verstärkung des Verstärkers (21) abhängig ist, wobei die Leistung des gesendeten Signals auf die Leistung des empfangenen Signals durch Rasten der Verstärkung des Verstärkers auf die Leistung des empfangenen Signals gerastet wird, so dass umso weniger gesendet wird, je näher sich das Ziel dem Radar befindet, um eine Sättigung des Radars zu vermeiden.

2. Transponder nach Anspruch 1, **dadurch gekennzeichnet, dass** die Modulation der Verstärkung durch Modulieren der Versorgungsspannung des Verstärkers erzielt wird, wobei die Spannung durch einen Spannungsgenerator (22) produziert wird.

3. Transponder nach einem der vorherigen Ansprüche, **dadurch gekennzeichnet, dass** der Verstärker (21) ein rauschaimer Verstärker ist.

**4.** Transponder nach einem der vorherigen Ansprüche, **dadurch gekennzeichnet, dass** das Modulationsgesetz peuodisch ist.

**5.** Transponder nach einem der vorherigen Ansprüche, **dadurch gekennzeichnet, dass** das Modulationsgesetz eines der Folgenden ist: rechteckig, dreieckig, sinusförmig, Gauß, Hann, Hamming und Blackman-Hamis.

**6.** Transponder nach einem der vorherigen Ansprüche, **dadurch gekennzeichnet, dass** das Modulationsgesetz des empfangenen Signals für den Transponder spezifisch ist, wobei Letzterer anhand des Modulationsgesetzes identifiziert werden kann.

**7.** Transponder nach einem der vorherigen Ansprüche, **dadurch gekennzeichnet, dass** die Empfangsantenne (1) ein Signal gemäß einer Polarisation empfangen kann und die Sendeantenne (2) ein Signal gemäß einer anderen Polarisation neusenden kann.

**8.** System zum Orten eines Ziels, **dadurch gekennzeichnet, dass** es wenigstens einen Transponder nach einem der vorherigen Ansprüche umfasst, wobei der Transponder auf dem Ziel montiert ist, und wenigstens ein bodengestütztes Doppler-Radar, wobei das Radar das von der Amplitudenmodulation des von dem Transponder empfangenen Signals erzeugte Doppler-Echo erkennt.

**9.** System nach Anspruch 8, **dadurch gekennzeichnet, dass** das Ziel ein Luftfahrzeug ist.

**10.** System nach Anspruch 9, **dadurch gekennzeichnet, dass** es das Luftfahrzeug in der Landephase führen kann.

**Claims**

**1.** A transponder capable of equipping a cooperative target facing a Doppler radar, comprising at least one reception antenna (1) capable of receiving a signal transmitted by said radar and a transmission antenna (2) adapted to retransmit a signal, the signal received by said reception antenna (1) being amplitude modulated before being retransmitted by said transmission antenna to produce a variation of the radar cross-section of said target, said variation causing a frequency shift between the signal transmitted and the signal received by said radar that is comparable to a Doppler echo, an amplifier (21) being connected between said reception antenna (1) and said transmission antenna (2), the amplitude modulation being carried out by modulating the gain of said amplifier (21), **characterised in that** the transmitted power depends on the gain of said amplifier (21), the power of the transmitted signal is slaved to the power of the received signal by slaving the gain of said amplifier to the power of the received signal, so that the closer the target is to said radar, the less it transmits in order to avoid saturating said radar.

**2.** The transponder according to claim 1, **characterised in that** the modulation of the gain is obtained by modulating the power supply voltage of said amplifier, said voltage being produced by a voltage generator (22).

**3.** The transponder according to any one of the preceding claims, **characterised in that** said amplifier (21) is a low noise amplifier.

**4.** The transponder according to any one of the preceding claims, **characterised in that** the modulation law is periodic.

**5.** The transponder according to any one of the preceding claims, **characterised in that** the modulation law is among the following: rectangular, triangular, sinusoidal, Gaussian, Hann, Hamming and Blackman-Harris.

**6.** The transponder according to any one of the preceding claims, **characterised in that** the modulation law of the received signal is specific to said transponder, said transponder being able to be identified by said modulation law.

**7.** The transponder according to any one of the preceding claims, **characterised in that** said reception antenna (1) is capable of receiving a signal according to one bias and the transmission antenna (2) is capable of retransmitting a signal according to another bias.

**8.** A system for locating a target, **characterised in that** it compuses at least one transponder according to any one of the preceding claims, said transponder equipping said target, and at least one ground-based Doppler radar, said radar detecting the Doppler echo produced by the amplitude modulation of the signal received by said transponder.

9. The system according to claim 8, **characterised in that** said target is an aircraft.

10. The system according to claim 9, **characterised in that** it is capable of guiding said aircraft during a landing or alighting phase.

Antenne de
réception

Amplificateur
faible bruit (LNA)  Filtre  Mélangeur  Filtre  9

Antenne
d'émission

LNA

5

LNA

10

Limiteur  6  3  8  Limiteur

7  Générateur de
fréquence  2

4

1

**FIG.1**

Antenne de
réception

Amplificateur
faible bruit (LNA)
21

Antenne
d'émission

LNA

7  10

Limiteur  Limiteur

Générateur de
tension basse
fréquence  Commande
d'alimentation ou
de gain  2

1

22

**FIG.2**

FIG.3

**RÉFÉRENCES CITÉES DANS LA DESCRIPTION**

**Documents brevets cités dans la description**

• US 4686534 A